# EUROPÄISCHE PATENTSCHRIFT

(11) **EP 3 282 095 B1**
(45) Veröffentlichungstag und Bekanntmachung des Hinweises auf die Patenterteilung: **22.05.2019**
(21) Anmeldenummer: 17185263.5
(22) Anmeldetag: 08.08.2017
(51) Int. Cl.: F01D 17/10, F01D 17/20, F01D 11/24

(54) **VORRICHTUNG EINER STRÖMUNGSMASCHINE ZUR BETÄTIGUNG EINER EINSTELLEINRICHTUNG UND STRÖMUNGSMASCHINE MIT EINER DERARTIGEN VORRICHTUNG**
APPARATUS OF A TURBO MACHINE FOR ACTUATING AN ADJUSTMENT DEVICE AND TURBO MACHINE WITH SUCH AN APPARATUS
DISPOSITIF D'UNE TURBOMACHINE POUR ACTIONNER UN DISPOSITIF DE RÉGLAGE ET TURBOMACHINE POURVUE D'UN TEL DISPOSITIF

(30) Priorität: 11.08.2016 DE 102016114930
(43) Veröffentlichungstag der Anmeldung: 14.02.2018
(73) Patentinhaber: Rolls-Royce Deutschland Ltd & Co KG, 15827 Blankenfelde-Mahlow (DE)
(72) Erfinder: Todorovic, Predrag, 10437 Berlin (DE)
(74) Vertreter: Schmidt, Martin Michael

(56) Entgegenhaltungen:
- DE-C- 267 508
- DE-C- 693 228
- GB-A- 836 580
- US-A- 767 250
- US-A- 2 782 001

## Beschreibung

Die Erfindung betrifft eine Vorrichtung einer Strömungsmaschine zur Betätigung einer Einstelleinrichtung, mittels welcher ein von einem Fluid durchströmbarer Strömungsquerschnitt eines Strömungskanals der Strömungsmaschine variierbar bzw. einstellbar ist, gemäß der im Oberbegriff des Patentanspruches 1 näher definierten Art. Weiterhin betrifft die Erfindung eine Strömungsmaschine mit einer derartigen Vorrichtung gemäß der im Patentanspruch 14 definierten Art.

Beispielsweise aus der DE 10 2009 010 647 A1 ist ein Flugtriebwerk mit einem Laufspalteinstellungssystem bekannt, wobei zur Einstellung eines Laufspalts zwischen einem Gehäuse und Spitzen von Turbinenlaufschaufeln über einen Einlassstutzen einem Nebenstromkanal Kühlluft entnommen wird und die Luftströmung über einen Kanal einem Kühlluftverteiler zuführbar ist. Der Kanal weist ein Regelventil auf, über das ein durch den Kanal strömendes Luftvolumen einstellbar ist. Das Regelventil ist über einen von einer Steuerung ansteuerbaren Motor betätigbar.

Aus der Praxis ist es bekannt den Motor als Elektromotor auszuführen, wobei das Regelventil über eine Drehung des Elektromotors in einer ersten Richtung von einer den Kanal schließenden Position um eine Achse in eine den Kanal zumindest teilweise freigebende Position verlagerbar ist. Bei einer hierzu entgegengesetzten Antriebsbewegung des Elektromotors wird das Regelventil von der den Kanal zumindest teilweise freigebenden Position in Richtung der den Kanal verschließenden Position verlagert.

Eine Betätigung des Regelventils mittels eines derart ausgeführten Elektromotors hat den Nachteil, dass das Regelventil beispielsweise bei einem Ausfall einer Stromversorgung des Elektromotors in seiner aktuellen Position verbleibt und nicht in die angestrebte, beispielsweise geschlossene Position, verlagerbar ist.

Es ist weiterhin bekannt, das Regelventil pneumatisch über eine Versorgung mit Kompressorluft zu betätigen. Zwar ist bei einer derartigen Ausführung durch eine Rückstelleinrichtung sichergestellt, dass das Regelventil in nicht mit Druckluft versorgtem Zustand in eine gewünschte Position bewegt ist. Allerdings bedingt eine derartige Lösung aufgrund der dafür erforderlichen Leitungen zur Führung der Kompressorluft mit Druckreduktions- und/oder -regulierungsstufen sowohl ein hohes Gewicht als auch hohe Kosten und beeinträchtigt durch die Entnahme von Kompressorluft einen Wirkungsgrad des Flugtriebwerks. Zudem ist aufgrund von Druckschwankungen der Kompressorluft nachteilhafterweise eine kontinuierliche Nachregelung einer Position des Regelventils erforderlich und eine exakte Einstellung einer gewünschten Position des Regelventils nicht in gewünschtem Umfang möglich. Zudem kann die Betriebstemperatur des Regelventils durch eine Leckage der heißen Kompressorluft unerwünscht ansteigen und durch einen Eintritt heißer Kompressorluft in den Kanal eine Temperatur der durch den Kanal geführten Kühlluft negativ beeinflussen.

Bei weiteren bekannten Ausführungen ist das Regelventil durch eine Betätigung mittels Kraftstoff verstellbar, wobei auch derartige Ausführungen kosten- und gewichtserhöhende Leitungen umfassen. Zudem besteht bei hohen Betriebstemperaturen des Regelventils die Gefahr, dass Kraftstoff beim Kontakt mit den heißen Gehäuseteilen entzündet wird.

Aus der US 767,250 A ist eine Turbine bekannt, die Strömungspassagen aufweist. Es ist ein in Längsrichtung bewegbares ringförmiges Ventil vorgesehen, das endseitig der Strömungspassagen angeordnet ist. Zur Verlagerung des Ventils ist ein Kniehebel vorgesehen, der mittels eines Kolbens mit einem Governor-Mechanismus verbunden ist. Der Governor-Mechanismus ist von einer Welle der Turbine angetrieben.

Es ist Aufgabe der vorliegenden Erfindung, eine kostengünstig und gewichtsoptimiert ausführbare Vorrichtung mit einer genau einstellbaren Betätigungseinrichtung zu schaffen, wobei die Betätigungseinrichtung bei einem Ausfall einer Antriebseinrichtung auf einfache Weise in eine gewünschte Position verlagerbar ist. Weiterhin ist es Aufgabe der vorliegenden Erfindung eine sicher betreibbare und kostengünstig und gewichtsoptimiert ausführbare Strömungsmaschine zu schaffen.

Erfindungsgemäß wird diese Aufgabe mit einer Vorrichtung mit den Merkmalen des Patentanspruches 1 und mit einer Strömungsmaschine mit den Merkmalen des Patentanspruches 14 gelöst.

Es ist eine Vorrichtung einer Strömungsmaschine, insbesondere einer Turbomaschine bzw. eines Flugtriebwerkes, zur Betätigung einer Einstelleinrichtung vorgesehen, mittels welcher ein von einem beispielsweise in Gasphase oder Flüssigphase befindlichem Fluid durchströmbarer Strömungsquerschnitt eines Strömungskanals der Strömungsmaschine variierbar ist, wobei die Vorrichtung mit einem eine insbesondere im Wesentlichen translatorisch verstellbare Betätigungseinrichtung aufweisenden Verlagerungsmechanismus, der mit der Einstelleinrichtung koppelbar ist, und mit einer zur Verlagerung der Betätigungseinrichtung ausgeführten Antriebseinrichtung ausgebildet ist, wobei der Verlagerungsmechanismus eine Fliehkrafteinrichtung aufweist, die in Abhängigkeit einer Drehzahl der Antriebseinrichtung zwischen einer Grundstellung und einer maximal verlagerten Arbeitsstellung verlagerbar ist, wobei die Betätigungseinrichtung in Abhängigkeit der Stellung der Fliehkrafteinrichtung insbesondere im Wesentlichen translatorisch gegenüber der Antriebseinrichtung verlagerbar ist, und wobei eine Rückstelleinrichtung vorgesehen ist, die zur Beaufschlagung der Fliehkrafteinrichtung mit einer die Fliehkrafteinrichtung in Richtung ihrer Grundstellung drückenden Kraft ausgeführt ist. Erfindungsgemäß ist die Antriebseinrichtung als Elektromotor ausgeführt.

Die erfindungsgemäße Vorrichtung ist vorteilhafterweise gewichts- und kostengünstig ausführbar, da zur Verlagerung der Betätigungseinrichtung keine Leitungen zur Führung eines Fluids zur Betätigung der Einstelleinrichtung in der Strömungsmaschine vorzusehen sind. Weiterhin ist die Betätigungseinrichtung durch eine Wahl der Antriebsdrehzahl des Elektromotors mittels der Fliehkrafteinrichtung auf konstruktiv einfache Weise besonders genau positionierbar, wobei mittels der Rückstelleinrichtung auf einfache Weise sichergestellt ist, dass die Betätigungseinrichtung bei einem Stromausfall des Elektromotors eine gewünschte Position einnimmt. Es kann beispielsweise vorgesehen sein, dass der Strömungskanal bei vorliegendem Feuerfall und einem Ausfall des Elektromotors zuverlässig mittels einer entsprechenden Betätigung der Einstelleinrichtung durch die Betätigungseinrichtung verschlossen wird.

Bei einer konstruktiv einfach ausgeführten Vorrichtung nach der Erfindung ist die Fliehkrafteinrichtung in einem ersten Bereich axial fest und drehbar gegenüber der Betätigungseinrichtung und in einem zweiten Bereich axial verschiebbar und drehbar gegenüber der Betätigungseinrichtung gelagert, wobei der erste Bereich und der zweite Bereich der Fliehkrafteinrichtung über wenigstens eine wenigstens zwei Hebel aufweisende Verbindungseinrichtung miteinander verbunden sind. Ein erster Hebel der Verbindungseinrichtung ist hierbei insbesondere gelenkig mit dem ersten Bereich der Fliehkrafteinrichtung verbunden, wobei ein zweiter Hebel der Verbindungseinrichtung insbesondere gelenkig mit dem zweiten Bereich der Fliehkrafteinrichtung verbunden ist. Der erste Hebel und der zweite Hebel sind zudem insbesondere gelenkig miteinander verbunden. Mit einer derartigen Ausführung der Fliehkrafteinrichtung ist eine große Kraft auf die Betätigungseinrichtung bei geringem Energieverbrauch der Antriebseinrichtung erzielbar. Wenn die Fliehkrafteinrichtung von der Antriebseinrichtung in Drehbewegung versetzt wird, werden die Hebel mit dem Verbindungsgelenk bezüglich der Betätigungseinrichtung radial nach außen bewegt, wobei hierdurch ein Abstand des ersten Bereichs von dem zweiten Bereich in Erstreckungsrichtung der Betätigungseinrichtung reduziert wird. Der erste Hebel und/oder der zweite Hebel können hierbei insbesondere im Verbindungsbereich der Hebel ein eine Fliehkraft erhöhendes Bauteil mit einem gewünschten Gewicht aufweisen, welches die Verlagerung des Verbindungsgelenks der Hebel nach außen unterstützt.

Die Fliehkrafteinrichtung ist bei einer vorteilhaften Ausführung der Erfindung mit zwei jeweils zwei Hebel aufweisenden Verbindungseinrichtungen ausgeführt, so dass die Fliehkrafteinrichtung einen sogenannten Governor-Mechanismus darstellt.

Eine konstruktiv einfache Ausführung der erfindungsgemäßen Vorrichtung ist geschaffen, wenn die Rückstelleinrichtung als Federeinrichtung ausgeführt ist.

Bei einer vorteilhaften Weiterbildung der Erfindung ist die Federeinrichtung sowohl zum Zusammenwirken mit dem ersten Bereich als auch mit dem zweiten Bereich der Fliehkrafteinrichtung ausgeführt und beaufschlagt diese beispielsweise mit einer die Bereiche auseinander drückenden Kraft.

Die Antriebseinrichtung ist insbesondere als Schrittmotor ausgeführt.

Um die Fliehkrafteinrichtung auf einfache Weise antreiben zu können, ist die Antriebseinrichtung bei einer vorteilhaften Ausführung der Erfindung mit einem der Bereiche der Fliehkrafteinrichtung drehfest verbunden.

Die Antriebseinrichtung weist bei einer konstruktiv einfachen Ausführung der erfindungsgemäßen Vorrichtung eine als Hohlwelle ausgeführte Antriebswelle auf, die mit einem der Bereiche der Fliehkrafteinrichtung drehfest verbunden ist und die Betätigungseinrichtung zumindest in einem der Bereiche der Fliehkrafteinrichtung umfangsseitig umfasst.

Die Betätigungseinrichtung kann zumindest abschnittsweise wellenförmig ausgeführt sein, wobei die Betätigungseinrichtung insbesondere in dem wellenförmigen Bereich mit der Fliehkrafteinrichtung zusammenwirkt.

Bei einer vorteilhaften Ausführung der Erfindung ist eine Sensoreinrichtung zur Ermittlung einer axialen Position der Betätigungseinrichtung vorgesehen, wobei die Sensoreinrichtung zur besonders exakten Messung der Position der Betätigungseinrichtung vorzugsweise als Differentialtransformator, beispielsweise als sogenannter Linear Variable Differential Transducer (LVDT), ausgeführt sein kann.

Um eine Position der Betätigungseinrichtung besonders genau gemäß einer Vorgabe einstellen zu können, kann eine zur Betätigung der Antriebseinrichtung ausgeführte Steuereinrichtung vorgesehen sein, wobei die Steuereinrichtung mit der Sensoreinrichtung verbunden ist und zur Betätigung der Antriebseinrichtung in Abhängigkeit eines Vergleichs einer vorgegebenen Position der Betätigungseinrichtung mit einer durch die Sensoreinrichtung ermittelten Position der Betätigungseinrichtung ausgeführt ist.

Zur konstruktiv einfachen Anbindung der Betätigungseinrichtung an die Einstelleinrichtung kann ein an die Betätigungseinrichtung gekoppelter Hebelmechanismus vorgesehen sein, mittels welchem der Verlagerungsmechanismus mit der Einstelleinrichtung koppelbar ist.

Alternativ hierzu kann auch ein an die Betätigungseinrichtung gekoppelter Zahnstangenantrieb vorgesehen sein, mittels welchem der Verlagerungsmechanismus mit der Einstelleinrichtung koppelbar ist.

Die Vorrichtung kann hierbei insgesamt auf einfache Weise in einem abgedichteten Bereich angeordnet sein. Dies ist insbesondere dann vorteilhaft, wenn die Vorrichtung bei rauen Umgebungsbedingungen eingesetzt wird, die zu einer starken Abnutzung, zu einer Beschädigung oder einer Blockierung der Vorrichtung führen könnten. Auch bei derartigen Bedingungen ist die Vorrichtung somit sicher betreibbar.

Es wird weiterhin eine Strömungsmaschine mit einem Strömungskanal vorgeschlagen, der einen von einem Fluid durchströmbaren Strömungsquerschnitt aufweist, wobei eine Einstelleinrichtung vorgesehen ist, mittels welcher ein durchströmbarer Strömungsquerschnitt des Strömungskanals variierbar bzw. einstellbar ist, wobei die Einstelleinrichtung mittels einer oben näher beschriebenen Vorrichtung verstellbar ist.

Die erfindungsgemäße Strömungsmaschine ist vorteilhafterweise gewichts- und kostengünstig ausführbar, da zur Verlagerung der Betätigungseinrichtung keine ein Arbeitsfluid zur Betätigung der Einstelleinrichtung fördernde Leitungen in der Strömungsmaschine vorzusehen sind. Mittels der Rückstelleinrichtung ist dabei auf einfache Weise sicherstellbar, dass die Betätigungseinrichtung auch bei einem Ausfall der Antriebseinrichtung beispielsweise im Fall des Auftretens eines Feuers oder bei einem Stromausfall in eine gewünschte Position, beispielsweise in eine den Strömungskanal verschließende Position, verlagert ist. Die Betätigungseinrichtung ist zudem durch die Fliehkrafteinrichtung auf konstruktiv einfache Weise besonders genau positionierbar.

Die erfindungsgemäße Vorrichtung ist grundsätzlich im Bereich sämtlicher, ein gasförmiges und/oder flüssiges Fluid führender Strömungskanäle einer insbesondere als Flugtriebwerk ausgeführten Strömungsmaschine einsetzbar, wobei der jeweilige Strömungskanal eine Einstelleinrichtung aufweist, mittels der ein für das Fluid durchströmbarer Strömungsquerschnitt des Strömungskanals im Bereich der Einstelleinrichtung variierbar ist. Der Strömungsquerschnitt kann hierbei mittels der beispielsweise als Regelventil oder schwenkbare Klappe ausgeführten Einstelleinrichtung insbesondere vollständig verschließbar und/oder nahezu vollständig freigebbar sein. Beispielsweise bei Auftreten eines Feuers oder eines Leistungsabfalls kann die Einstelleinrichtung mittels der Rückstelleinrichtung je nach Anwendungsfall sicher in eine den Strömungsquerschnitt freigebende oder in eine den Strömungsquerschnitt schließende Position verlagert werden.

Die erfindungsgemäße Vorrichtung kann insbesondere zur Betätigung eines Regelventils oder einer Klappe eines Turbinenlaufspaltkontrollsystems eingesetzt werden, bei welchem einem Nebenstromkanal entnommene Kühlluft über einen die Einstelleinrichtung aufweisenden Strömungskanal in Richtung eines Turbinengehäuses und von Turbinenrädern führbar ist.

Weiterhin kann die erfindungsgemäße Vorrichtung im Bereich eines Umgebungskontrollsystems, eines sogenannten Environmental Control Systems, eines Systems zur Kühlung einer Turbine und/oder Lagern oder zur Betätigung eines Kraftstoffabsperrventils vorgesehen sein.

Weitere Vorteile und vorteilhafte Ausführungsformen der erfindungsgemäßen Vorrichtung bzw. der erfindungsgemäßen Strömungsmaschine ergeben sich aus den Patentansprüchen und den nachfolgend unter Bezugnahme auf die Zeichnung prinzipmäßig beschriebenen Ausführungsbeispielen, wobei in der Beschreibung der verschiedenen Ausführungsbeispiele zugunsten der Übersichtlichkeit für bau- und funktionsgleiche Bauteile dieselben Bezugszeichen verwendet werden.

Es zeigt:
- Fig. 1: eine stark schematisierte Längsschnittansicht eines Flugtriebwerkes;
- Fig. 2: einen vereinfacht dargestellten Ausschnitt des Flugtriebwerks gemäß Fig. 1, wobei ein Laufspalteinstellungssystem mit einer Vorrichtung näher ersichtlich ist, mittels welcher eine Einstelleinrichtung betätigbar ist;
- Fig. 3: eine stark vereinfacht dargestellte dreidimensionale Ansicht des Laufspalteinstellungssystems gemäß Fig. 2 mit der erfindungsgemäßen Vorrichtung;
- Fig. 4: eine vereinfachte dreidimensionale Darstellung der erfindungsgemäßen Vorrichtung gemäß Fig. 2 und Fig. 3 in Alleinstellung;
- Fig. 5: eine vereinfachte dreidimensionale Darstellung eines Ausschnitts der erfindungsgemäßen Vorrichtung gemäß Fig. 4;
- Fig. 6: eine stark vereinfachte Darstellung eines Ausschnitts des Flugtriebwerks gemäß Fig. 1 bis Fig. 5, wobei eine Anbindungseinrichtung ersichtlich ist, mittels welcher die Einstelleinrichtung von der erfindungsgemäßen Vorrichtung betätigbar ist; und
- Fig. 7: eine vereinfachte Darstellung des Ausschnitts des Flugtriebwerks gemäß Fig. 6, wobei eine alternative Ausführung einer Anbindungseinrichtung zur Kopplung der Vorrichtung mit der Einstelleinrichtung gezeigt ist.

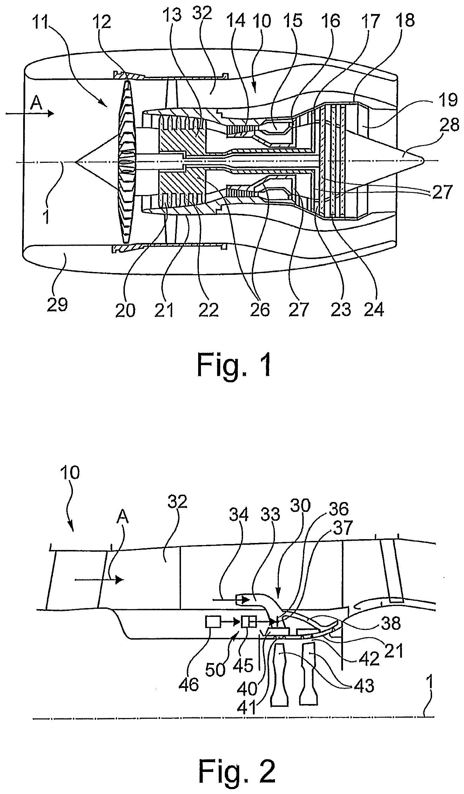

In Fig. 1 ist eine als Flugtriebwerk 10 bzw. Gasturbinentriebwerk ausgeführte Strömungsmaschine gezeigt. Das Flugtriebwerk 10 ist in herkömmlicher Weise ausgebildet und umfasst in Strömungsrichtung A hintereinander einen Lufteinlass 11, einen in einem Gehäuse umlaufenden Fan 12, einen Zwischendruckkompressor 13, einen Hochdruckkompressor 14, Brennkammern 15, eine Hochdruckturbine 16, eine Zwischendruckturbine 17 und eine Niederdruckturbine 18 sowie eine Abgasdüse 19, die sämtlich um eine zentrale Triebwerksachse 1 angeordnet sind.

Der Zwischendruckkompressor 13 und der Hochdruckkompressor 14 umfassen jeweils mehrere Stufen, von denen jede eine in Umfangsrichtung verlaufende Anordnung fester stationärer Leitschaufeln 20 aufweist, die allgemein als Statorschaufeln bezeichnet werden und die radial nach innen vom Triebwerksgehäuse 21 in einem ringförmigen Strömungskanal durch die Kompressoren 13, 14 vorstehen. Die Kompressoren weisen weiter eine Anordnung von Kompressorlaufschaufeln 22 auf, die radial nach außen von einer drehbaren Trommel oder Scheibe 26 vorstehen, die mit Naben 27 der Hochdruckturbine 16 bzw. der Zwischendruckturbine 17 gekoppelt sind.

Die Turbinenabschnitte 16, 17, 18 weisen ähnliche Stufen auf, umfassend eine Anordnung von festen Leitschaufeln 23, die radial nach innen vom Gehäuse 21 in den ringförmigen Strömungskanal durch die Turbinen 16, 17, 18 vorstehen, und eine nachfolgende Anordnung von Turbinenschaufeln 24, die nach außen von einer drehbaren Nabe 27 vorstehen. Die Kompressortrommel oder Kompressorscheibe 26 und die darauf angeordneten Schaufeln 22 sowie die Turbinenrotornabe 27 und die darauf angeordneten Turbinenlaufschaufeln 24 drehen sich im Betrieb um die Triebwerksachse 1. Das Bezugszeichen 28 zeigt einen Auslasskonus.

In dem Ausschnitt des Flugtriebwerks 10 gemäß Fig. 2 ist ein aktives Laufspalteinstellungssystem 30 ersichtlich, mittels welchem durch eine äußere Kühlung des Triebwerksgehäuses 21 bzw. Turbinengehäuses ein Laufspalt zwischen Belägen an einer radial inneren Oberfläche des Turbinengehäuses 21 und Turbinenrotorschaufelspitzen 43 beeinflussbar ist, wobei sowohl thermische Ausdehnungen des Turbinengehäuses 21 als auch radiale Ausdehnungen der Turbinenrotoren- und schaufeln 24 berücksichtigt werden.

Das Laufspalteinstellungssystem 30 weist einen Einlassstutzen 33 auf, der einen Lufteinlass bildet und zumindest bereichsweise innerhalb eines Nebenstromkanals 32 des Flugtriebwerks 10 angeordnet ist. Eine durch den Einlassstutzen 33 eintretende Luftströmung 34 wird durch einen Strömungskanal 35 radial nach innen geleitet, wobei in dem Strömungskanal 35 eine als Regelventil 36 bzw. als um eine Achse 37 verschwenkbare Klappe ausgeführte Einstelleinrichtung angeordnet ist, mittels welcher ein durchströmbarer Strömungsquerschnitt des Strömungskanals 35 variierbar bzw. einstellbar ist. Stromauf der Klappe 36 zweigt vorliegend aus dem Strömungskanal 35 ein weiterer Strömungskanal 38 ab, mittels dem Kühlluft ungeregelt führbar ist.

In der Darstellung gemäß Fig. 2 ist die Klappe 36 in einer den Strömungskanal 35 nahezu vollständig freigebenden Position gezeigt, wobei die Klappe 36 ausgehend von der gezeigten Position in eine den Strömungskanal 35 insbesondere vollständig verschließende Position um die Achse 37 verschwenkbar ist.

Durch den Strömungskanal 35 strömende Kühlluft wird stromab der Klappe 36 einem Kühlluftverteiler 40 zugeführt, der angrenzend an das Turbinengehäuse 21 angeordnet ist, so dass die Kühlluft durch Prallkühldüsen oder eine Lochung 41 auf eine Wandung des Turbinengehäuses 21 leitbar ist. Mittels dieser Kühlluftführung kann ein Laufspalt 42 zwischen dem Turbinengehäuse 21 und Turbinenschaufeispitzen 43 in gewünschtem Umfang eingestellt werden.

Zur Verlagerung der Klappe 36 zwischen der den Strömungskanal 35 schließenden Position und der den Strömungskanal 35 nahezu vollständig freigebenden Position ist eine Antriebseinrichtung 45 einer Vorrichtung 50 vorgesehen, die von einer Steuereinrichtung 46 betätigbar ist.

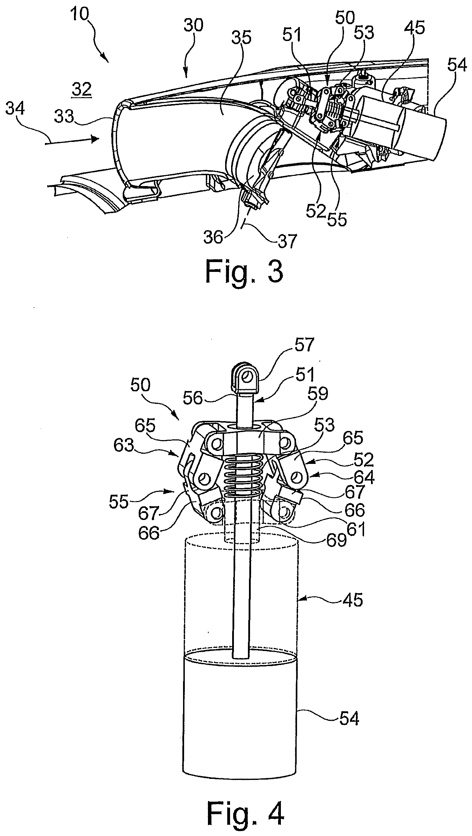

Fig. 3 zeigt die Vorrichtung 50 zur Betätigung der Klappe 36 stark schematisiert, wobei stromauf der Klappe 36 bei der Ausführung gemäß Fig. 3 kein weiterer Strömungskanal abzweigt.

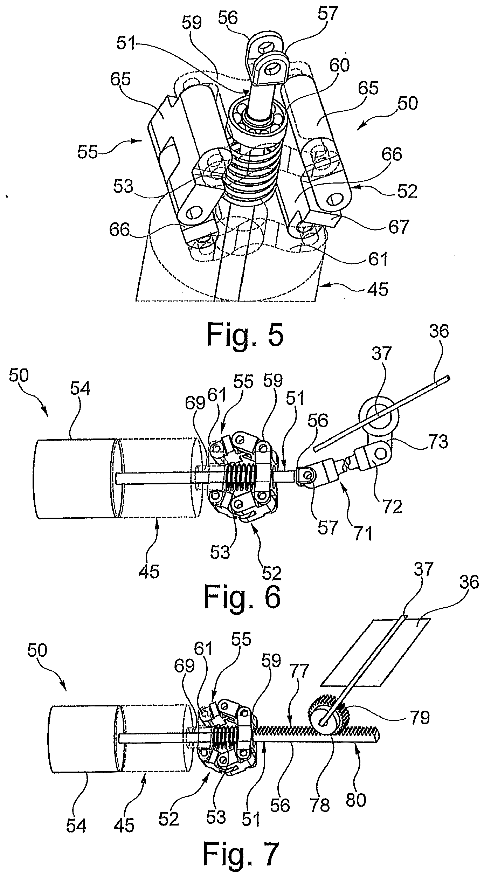

Die in Fig. 4 und Fig. 5 in Alleinstellung gezeigte Vorrichtung 50 weist einen Verlagerungsmechanismus 55 auf, der hier neben der als Elektromotor 45 und beispielsweise als Schrittmotor ausgeführten Antriebseinrichtung mit einer Betätigungseinrichtung 51, einer Fliehkrafteinrichtung 52 und einer Rückstelleinrichtung 53 ausgeführt ist. Die Vorrichtung 50 weist zudem eine Sensoreinrichtung 54 auf.

Die Betätigungseinrichtung 51 ist hierbei als Welle ausgeführt und weist in einem ersten Endbereich 56 eine Koppeleinrichtung 57 auf, über welche die Betätigungseinrichtung 51 an die Klappe 36 anbindbar ist. Die Fliehkrafteinrichtung 52 umfasst einen ersten Bereich 59, in dem die Fliehkrafteinrichtung 52 mittels einer in Fig. 5 näher ersichtlichen Lagereinrichtung 60 axial festgelegt und drehbar gegenüber der Betätigungseinrichtung 51 gelagert ist. Die Fliehkrafteinrichtung 52 weist weiterhin einen zweiten Bereich 61 auf, der auf einer der Koppeleinrichtung 57 abgewandten Seite des ersten Bereichs 59 angeordnet ist, wobei die Fliehkrafteinrichtung 52 im zweiten Bereich 61 drehbar und axial verschiebbar gegenüber der Betätigungseinrichtung 51 gelagert ist, so dass ein Abstand zwischen dem ersten Bereich 59 und dem zweiten Bereich 61 der Fliehkrafteinrichtung 52 in Längsrichtung der Betätigungseinrichtung 51 variierbar ist.

Der erste Bereich 59 und der zweite Bereich 61 der Fliehkrafteinrichtung 52 sind vorliegend über zwei auf gegenüberliegenden Seiten der Betätigungseinrichtung 51 angeordnete Verbindungseinrichtungen 63, 64 miteinander verbunden, wobei die Verbindungseinrichtungen 63, 64 jeweils einen ersten Hebel 65, die gelenkig an den ersten Bereich 59 angebunden sind, und einen zweiten Hebel 66, die gelenkig an den zweiten Bereich 61 angebunden sind, aufweisen. Die Hebel 65 und 66 einer Verbindungseinrichtung 63 oder 64 sind in dem ersten Bereich 59 bzw. dem zweiten Bereich 61 abgewandten Bereichen zudem jeweils gelenkig miteinander verbunden, wobei die zweiten Hebel 66 vorliegend einen ein Gewicht erhöhenden Bereich 67 aufweisen. Die Fliehkrafteinrichtung 52 stellt vorliegend einen sogenannten Governor-Mechanismus dar.

Die Rückstelleinrichtung 53 ist hier als Schraubenfedereinrichtung ausgeführt, die mit ihren Windungen die Betätigungseinrichtung 51 umfangsseitig umgreift. Die Schraubenfedereinrichtung 53 ist einerseits mit dem ersten Bereich 59 der Fliehkrafteinrichtung 52 und andererseits mit dem zweiten Bereich 61 der Fliehkrafteinrichtung 52 verbunden und übt eine die Bereiche 59, 61 auseinander drückende Kraft auf die Bereiche 59, 61 aus. Bei maximal auseinanderbewegter Position der Bereiche 59, 61 befindet sich die Klappe 36 in der den Strömungskanal 35 schließenden Position. In diese Position wird die Klappe 36 somit in unbetätigtem Zustand der Antriebseinrichtung 45 bewegt.

Die als Elektromotor 45 beispielsweise in der Art eines Schrittmotors ausgeführte Antriebseinrichtung weist eine als Hohlwelle 69 ausgeführte Antriebswelle auf, die die wellenförmige Betätigungseinrichtung 51 auf einer dem ersten Bereich 59 der Fliehkrafteinrichtung 51 abgewandten Seite des zweiten Bereichs 61 der Fliehkrafteinrichtung 51 umgreift. Die Hohlwelle 69 ist hier drehfest mit dem zweiten Bereich 61 der Fliehkrafteinrichtung 52 verbunden, so dass eine Drehbewegung der Antriebswelle 69 direkt auf die Fliehkrafteinrichtung 52 wirkt und sich diese gemeinsam mit der Antriebswelle 69 um die Betätigungseinrichtung 51 dreht.

Neben der Antriebswelle 69 umgreift vorliegend der gesamte Elektromotor 45 die Betätigungseinrichtung 51, die den gesamten Elektromotor 45 in Längsrichtung der Betätigungseinrichtung 51 bis zu der Sensoreinrichtung 54 durchläuft. Die Sensoreinrichtung 54 grenzt hier auf einer dem zweiten Bereich 61 der Fliehkrafteinrichtung 52 abgewandten Seite an den Elektromotor 45. Mittels der beispielsweise als Differentialtransformator 54 ausgeführten Sensoreinrichtung ist eine Position der Betätigungseinrichtung 51 bezüglich der Längsrichtung der Betätigungseinrichtung 51 exakt bestimmbar.

Fig. 6 zeigt vereinfacht eine Anbindungseinrichtung 71, mittels welcher die Betätigungseinrichtung 51 an die Klappe 36 angekoppelt ist. Die Anbindungseinrichtung 71 weist hier einen gelenkig an die Koppeleinrichtung 57 der Betätigungseinrichtung 51 angebundenen Hebel 72 auf, der an einen mit der Klappe 36 fest verbundenen Arm 73 gelenkig angebunden ist. Durch eine insbesondere translatorische Verlagerungsbewegung der Betätigungseinrichtung 51 ist die Klappe 36 um die Achse 37 verschwenkbar.

Eine hierzu alternativ ausgeführte Anbindungseinrichtung 77 ist in Fig. 7 gezeigt, wobei die Betätigungseinrichtung 51 hierbei mittels eines Zahnstangenantriebs 80 mit der Klappe 36 gekoppelt ist. Die Betätigungseinrichtung 51 ist hierzu auf einer dem zweiten Bereich 61 der Fliehkrafteinrichtung 52 abgewandten Seite des ersten Bereichs 59 fest mit einem Zahnstangenbereich 78 des Zahnstangenantriebs 80 verbunden, der mit einem um die Achse 37 drehbar gelagerten Zahnrad 79 des Zahnstangenantriebs 80 kämmt. Das Zahnrad 79 ist fest mit der Klappe 36 verbunden, so dass eine im Wesentlichen translatorische Verlagerung der Betätigungseinrichtung 51 zu einer Verschwenkung der Klappe 36 um die Achse 37 führt.

Soll die Klappe 36 ausgehend von ihrer geschlossenen Position in eine den Strömungskanal 35 zumindest teilweise freigebende Position verlagert werden, steuert die Steuereinrichtung 46 den Elektromotor 45 derart an, dass sich die Hohlwelle 69 um die Betätigungseinrichtung 51 dreht. In Abhängigkeit der Drehgeschwindigkeit der Hohlwelle 69 schwenkt ein Verbindungspunkt der Hebel 65, 66 der Verbindungseinrichtungen 63, 64 bezüglich der Betätigungseinrichtung 51 ausgehend von einer Grundstellung ohne Drehkraftbeaufschlagung durch den Elektromotor 45 im Bereich eines Verbindungspunkts der Hebel 65 und 66 in eine Arbeitsstellung nach außen, wobei der erste Bereich 59 der Fliehkrafteinrichtung 52 hierdurch in Abhängigkeit der Drehgeschwindigkeit der Fliehkrafteinrichtung 52 entgegen der Federkraft der Federeinrichtung 53 in Richtung des zweiten Bereichs 61 der Fliehkrafteinrichtung 52 bewegt wird. Die Betätigungseinrichtung 51 wird durch ihre axiale Festlegung mittels der Lagereinrichtung 60 im ersten Bereich 59 der Fliehkrafteinrichtung 52 hierdurch mit ihrem ersten Endbereich 56 im Wesentlichen translatorisch in Richtung des zweiten Bereichs 61 der Fliehkrafteinrichtung 52 mitbewegt, wobei die Klappe 36 über die entsprechende Anbindungseinrichtung 71 bzw. 77 hierdurch um die Achse 37 verlagert wird.

Die mit der Sensoreinrichtung 54 gekoppelte Steuereinrichtung 46 überprüft dabei fortlaufend eine Ist-Position der Betätigungseinrichtung 51 gegenüber einer Soll-Position und betätigt den Elektromotor 45 bei einer Abweichung in erforderlichem Umfang.

Die erfindungsgemäße Vorrichtung 50 kann neben dem beschriebenen Anwendungsfall grundsätzlich zur Betätigung sämtlicher Einstelleinrichtungen vorgesehen werden, mittel denen ein durchströmbarer Strömungsquerschnitt einer Strömungsmaschine 10 einstellbar ist.

### Bezuqszeichenliste

- 1: Triebwerksachse
- 10: Strömungsmaschine; Flugtriebwerk
- 11: Lufteinlass
- 12: Fan
- 13: Zwischendruckkompressor
- 14: Hochdruckkompressor
- 15: Brennkammer
- 16: Hochdruckturbine
- 17: Zwischendruckturbine
- 18: Niederdruckturbine
- 19: Abgasdüse
- 20: Leitschaufeln
- 21: Triebwerksgehäuse
- 22: Kompressorlaufschaufeln
- 23: Leitschaufeln
- 24: Turbinenschaufeln
- 26: Scheibe
- 27: Nabe
- 28: Auslasskonus
- 30: Laufspalteinstellungssystem
- 32: Nebenstromkanal
- 33: Einlassstutzen
- 34: Luftströmung
- 35: Strömungskanal
- 36: Einstelleinrichtung; Regelventil; Klappe
- 37: Achse
- 38: weiterer Strömungskanal
- 40: Kühlluftverteiler
- 41: Lochung
- 42: Laufspalt
- 43: Turbinenschaufelspitzen
- 45: Antriebseinrichtung; Elektromotor
- 46: Steuereinrichtung
- 50: Vorrichtung
- 51: Betätigungseinrichtung
- 52: Fliehkrafteinrichtung
- 53: Rückstelleinrichtung; Federeinrichtung
- 54: Sensoreinrichtung
- 55: Verlagerungsmechanismus
- 56: erster Endbereich der Betätigungseinrichtung
- 57: Koppeleinrichtung
- 59: erster Bereich der Fliehkrafteinrichtung
- 60: Lagereinrichtung
- 61: zweiter Bereich der Fliehkrafteinrichtung
- 63: Verbindungseinrichtung
- 64: Verbindungseinrichtung
- 65: erster Hebel der Verbindungseinrichtungen
- 66: zweiter Hebel der Verbindungseinrichtungen
- 67: Bereich des zweiten Hebels
- 69: Antriebswelle; Hohlwelle
- 71: Anbindungseinrichtung
- 72: Hebel
- 73: Arm
- 77: Anbindungseinrichtung
- 78: Zahnstangenbereich der Betätigungseinrichtung
- 79: Zahnrad
- 80: Zahnstangenantrieb
- A: Anströmrichtung

## Patentansprüche

1. Vorrichtung (50) einer Strömungsmaschine (10) zur Betätigung einer Einstelleinrichtung (36), mittels welcher ein von einem Fluid durchströmbarer Strömungsquerschnitt eines Strömungskanals (35) der Strömungsmaschine (10) variierbar ist, mit einem eine verstellbare Betätigungseinrichtung (51) aufweisenden Verlagerungsmechanismus (55), der mit der Einstelleinrichtung (36) koppelbar ist, und mit einer zur Verlagerung der Betätigungseinrichtung (51) ausgeführten Antriebseinrichtung (45), wobei der Verlagerungsmechanismus (55) eine Fliehkrafteinrichtung (52) aufweist, die in Abhängigkeit einer Drehzahl der Antriebseinrichtung (45) zwischen einer Grundstellung und einer maximal verlagerten Arbeitsstellung verlagerbar ist, wobei die Betätigungseinrichtung (51) in Abhängigkeit der Stellung der Fliehkrafteinrichtung (52) gegenüber der Antriebseinrichtung (45) verlagerbar ist, und wobei eine Rückstelleinrichtung (53) vorgesehen ist, die zur Beaufschlagung der Fliehkrafteinrichtung (52) mit einer die Fliehkrafteinrichtung (52) in Richtung ihrer Grundstellung drückenden Kraft ausgeführt ist, **dadurch gekennzeichnet, dass** die Antriebseinrichtung (45) als Elektromotor ausgeführt ist.

2. Vorrichtung nach Anspruch 1, **dadurch gekennzeichnet, dass** die Fliehkrafteinrichtung (52) in einem ersten Bereich (59) axial fest und drehbar gegenüber der Betätigungseinrichtung (51) und in einem zweiten Bereich (61) axial verschiebbar und drehbar gegenüber der Betätigungseinrichtung (51) gelagert ist, wobei der erste Bereich (59) und der zweite Bereich (61) der Fliehkrafteinrichtung (52) über wenigstens eine wenigstens zwei Hebel (65, 66) aufweisende Verbindungseinrichtung (63, 64) miteinander verbunden ist.

3. Vorrichtung nach Anspruch 2, **dadurch gekennzeichnet, dass** die Fliehkrafteinrichtung (52) mit zwei jeweils zwei Hebel (65, 66) aufweisenden Verbindungseinrichtungen (63, 64) ausgeführt ist.

4. Vorrichtung nach einem der Ansprüche 1 bis 3, **dadurch gekennzeichnet, dass** die Rückstelleinrichtung (53) als Federeinrichtung ausgeführt ist.

5. Vorrichtung nach Anspruch 4, **dadurch gekennzeichnet, dass** die Federeinrichtung (53) zum Zusammenwirken sowohl mit dem ersten Bereich (59) als auch mit dem zweiten Bereich (61) der Fliehkrafteinrichtung (52) ausgeführt ist.

6. Vorrichtung nach einem der Ansprüche 2 bis 5, **dadurch gekennzeichnet, dass** die Antriebseinrichtung (45) mit einem der Bereiche (59, 61) der Fliehkrafteinrichtung (52) drehfest verbunden ist.

7. Vorrichtung nach Anspruch 6, **dadurch gekennzeichnet, dass** die Antriebseinrichtung (45) eine als Hohlwelle ausgeführte Antriebswelle (69) aufweist, die mit einem der Bereiche (59 bzw. 61) der Fliehkrafteinrichtung (52) drehfest verbunden ist und die Betätigungseinrichtung (51) zumindest in einem der Bereiche (59 bzw. 61) der Fliehkrafteinrichtung (52) umfangsseitig umfasst.

8. Vorrichtung nach einem der Ansprüche 1 bis 7, **dadurch gekennzeichnet, dass** die Betätigungseinrichtung (51) zumindest abschnittsweise wellenförmig ausgeführt ist.

9. Vorrichtung nach einem der Ansprüche 1 bis 8, **dadurch gekennzeichnet, dass** eine Sensoreinrichtung (54) zur Ermittlung einer axialen Position der Betätigungseinrichtung (51) vorgesehen ist.

10. Vorrichtung nach Anspruch 9, **dadurch gekennzeichnet, dass** die Sensoreinrichtung (54) als Differentialtransformator ausgeführt ist.

11. Vorrichtung nach einem der Ansprüche 9 oder 10, **dadurch gekennzeichnet, dass** eine zur Betätigung der Antriebseinrichtung (45) ausgeführte Steuereinrichtung (46) vorgesehen ist, wobei die Steuereinrichtung (46) mit der Sensoreinrichtung (54) verbunden ist und zur Betätigung der Antriebseinrichtung (45) in Abhängigkeit eines Vergleichs einer vorgegebenen Position der Betätigungseinrichtung (51) mit einer durch die Sensoreinrichtung (54) ermittelten Position der Betätigungseinrichtung (51) ausgeführt ist.

12. Vorrichtung nach einem der Ansprüche 1 bis 11, **dadurch gekennzeichnet, dass** ein an die Betätigungseinrichtung (51) gekoppelter Hebelmechanismus (71) vorgesehen ist, mittels welchem der Verlagerungsmechanismus (55) mit der Einstelleinrichtung (36) koppelbar ist.

13. Vorrichtung nach einem der Ansprüche 1 bis 11, **dadurch gekennzeichnet, dass** ein an die Betätigungseinrichtung (51) gekoppelter Zahnstangenantrieb (80) vorgesehen ist, mittels welchem der Verlagerungsmechanismus (55) mit der Einstelleinrichtung (36) koppelbar ist.

14. Strömungsmaschine (10) mit einem Strömungskanal (35), der einen von einem Fluid durchströmbaren Strömungsquerschnitt aufweist, wobei eine Einstelleinrichtung (36) vorgesehen ist, mittels welcher der durchströmbare Strömungsquerschnitt des Strömungskanals (35) variierbar ist, **dadurch gekennzeichnet, dass** die Einstelleinrichtung (36) mittels einer Vorrichtung (50) nach einem der Ansprüche 1 bis 13 verstellbar ist.

## Claims

1. Device (50) of a turbomachine (10) for actuating a setting means (36) by means of which a flow cross-section of a flow channel (35) of the turbomachine (10) that is passable by a fluid may be varied, having a shifting mechanism (55) that has an adjustable actuating device (51) and that can be coupled to the adjusting means (36), and having a drive appliance (45) that is embodied for displacing the actuating device (51), wherein the displacing mechanism (55) comprises a centrifugal device (52) which can be shifted between a basic position and a maximally displaced working position depending on the rotational speed of the drive appliance (45), wherein the actuating device (51) is displaceable with respect to the drive appliance (45) depending on the position of the centrifugal device (52), and wherein a resetting device (53) is provided, being embodied for applying a force to the centrifugal device (52) that presses the centrifugal device (52) in the direction of its basic position, **characterized in that** the drive appliance (45) is embodied as an electric motor.

2. Device according to claim 1, **characterized in that**, in a first area (59), the centrifugal device (52) is mounted in an axially fixed manner and so as to be rotatable relative to the actuating device (51) and, in a second area (61), is mounted in an axially displaceable manner and so as to be rotatable relative to the actuating device (51), wherein the first area (59) and the second area (61) of the centrifugal device (52) are connected to each other via at least one connecting means (63, 64) having at least two levers (65, 66).

3. Device according to claim 2, **characterized in that** the centrifugal device (52) is embodied with two connecting appliances (63, 64) that respectively have two levers (65, 66).

4. Device according to any of the claims 1 to 3, **characterized in that** the resetting device (53) is embodied as a spring device.

5. Device according to claim 4, **characterized in that** the spring device (53) is embodied for acting together with both the first area (59) and the second area (61) of the centrifugal device (52).

6. Device according to any of the claims 2 to 5, **characterized in that** the drive appliance (45) is connected in a torque-proof manner to one of the areas (59, 61) of the centrifugal device (52).

7. Device according to claim 6, **characterized in that** the drive appliance (45) has a drive shaft (69) that is embodied as a hollow shaft and that is connected in a torque-proof manner to one of the areas (59 or 61) of the centrifugal device (52), and that engages circumferentially around the actuating device (51) at least in one of the areas (59 or 61) of the centrifugal device (52).

8. Device according to any of the claims 1 to 7, **characterized in that** the actuating device (51) is embodied in a wave-shaped manner at least in certain areas.

9. Device according to any of the claims 1 to 8, **characterized in that** a sensor device (54) for determining an axial position of the actuating device (51) is provided.

10. Device according to claim 9, **characterized in that** the sensor device (54) is embodied as a differential transformer.

11. Device according to any of the claims 9 or 10, **characterized in that** a control device (46) embodied for actuating the drive appliance (45) is provided, wherein the control device (46) is connected to the sensor device (54) and is embodied for actuating the drive appliance (45) depending on a comparison of a predetermined position of the actuating device (51) to a position of the actuating device (51) as determined by the sensor device (54).

12. Device according to any of the claims 1 to 11, **characterized in that** a lever mechanism (71) coupled to the actuating device (51) is provided, by means of which the displacing mechanism (55) can be coupled to the adjusting means (36).

13. Device according to any of the claims 1 to 11, **characterized in that** a rack and pinion drive (80) coupled to the actuating device (51) is provided, by means of which the displacing mechanism (55) can be coupled to the adjusting means (36).

14. Turbomachine (10) having a flow channel (35) that has a flow cross-section through which a fluid can pass, wherein an adjusting means (36) is provided, by means of which the passable flow cross section of the flow channel (35) can be varied, **characterized in that** the adjusting means (36) can be adjusted by a device (50) according to any one of the claims 1 to 13.

## Revendications

1. Dispositif (50) d'une turbomachine (10) pour actionner un dispositif de réglage (36), au moyen duquel on peut faire varier une section transversale d'écoulement d'un canal d'écoulement (35) de la turbomachine (10) pouvant être traversée par un fluide, avec un dispositif de déplacement (55) présentant un dispositif d'actionnement déplaçable (51), qui peut être couplé au dispositif de réglage (36), et avec un dispositif d'entraînement (45) configuré pour le déplacement du dispositif d'actionnement (51), dans lequel le mécanisme de déplacement (55) présente un dispositif centrifuge (52), qui peut être déplacé en fonction d'un nombre de tours du dispositif d'entraînement (45) entre une position de base et une position de travail déplacée au maximum, dans lequel le dispositif d'actionnement (51) peut être déplacé par rapport au dispositif d'entraînement (45) en fonction de la position du dispositif centrifuge (52), et dans lequel il est prévu un dispositif de rappel (53), qui est configuré pour activer le dispositif centrifuge (52) avec une force poussant le dispositif centrifuge (52) en direction de sa position de base, **caractérisé en ce que** le dispositif d'entraînement (45) est formé par un moteur électrique.

2. Dispositif selon la revendication 1, **caractérisé en ce que** le dispositif centrifuge (52) est monté dans une première région (59) de façon fixe axialement et rotative par rapport au dispositif d'actionnement (51) et dans une deuxième région (61) de façon déplaçable axialement et rotative par rapport au dispositif d'actionnement (51), dans lequel la première région (59) et la deuxième région (61) du dispositif centrifuge (52) sont reliées l'une à l'autre par un dispositif de liaison (63, 64) présentant au moins deux leviers (65, 66).

3. Dispositif selon la revendication 2, **caractérisé en ce que** le dispositif centrifuge (52) est configuré avec deux dispositifs de liaison (63, 64) présentant respectivement deux leviers (65, 66).

4. Dispositif selon l'une quelconque des revendications 1 à 3, **caractérisé en ce que** le dispositif de rappel (53) est formé par un dispositif à ressort.

5. Dispositif selon la revendication 4, **caractérisé en ce que** le dispositif à ressort (53) est configuré pour coopérer aussi bien avec la première région (59) qu'avec la deuxième région (61) du dispositif centrifuge (52).

6. Dispositif selon l'une quelconque des revendications 2 à 5, **caractérisé en ce que** le dispositif d'entraînement (45) est assemblé de façon calée en rotation à une des régions (59, 61) du dispositif centrifuge (52).

7. Dispositif selon la revendication 6, **caractérisé en ce que** le dispositif d'entraînement (45) présente un arbre d'entraînement (69) formé par un arbre creux, qui est assemblé de façon calée en rotation à une des régions (59 ou 61) du dispositif centrifuge (52) et qui comprend le dispositif d'actionnement (51) du côté périphérique au moins dans une des régions (59 ou 61) du dispositif centrifuge (52).

8. Dispositif selon l'une quelconque des revendications 1 à 7, **caractérisé en ce que** le dispositif d'actionnement (51) est réalisé au moins en partie sous forme ondulée.

9. Dispositif selon l'une quelconque des revendications 1 à 8, **caractérisé en ce qu'**il est prévu un dispositif de capteur (54) pour déterminer une position axiale du dispositif d'actionnement (51).

10. Dispositif selon la revendication 9, **caractérisé en ce que** le dispositif de capteur (54) est formé par un transformateur différentiel.

11. Dispositif selon une des revendications 9 ou 10, **caractérisé en ce qu'**il est prévu un dispositif de commande (46) configuré pour actionner le dispositif d'entraînement (45), dans lequel le dispositif de commande (46) est relié au dispositif de capteur (54) et est configuré pour actionner le dispositif d'entraînement (45) en fonction d'une comparaison d'une position prédéterminée du dispositif d'actionnement (51) avec une position du dispositif d'actionnement (51) déterminée par le dispositif de capteur (54).

12. Dispositif selon l'une quelconque des revendications 1 à 11, **caractérisé en ce qu'**il est prévu un mécanisme à levier (71) couplé au dispositif d'actionnement (51), au moyen duquel le mécanisme de déplacement (55) peut être couplé au dispositif de réglage (36).

13. Dispositif selon l'une quelconque des revendications 1 à 11, **caractérisé en ce qu'**il est prévu un entraînement à crémaillère (80) couplé au dispositif d'actionnement (51), au moyen duquel le mécanisme de déplacement (55) peut être couplé au dispositif de réglage (36).

14. Turbomachine (10) avec un canal d'écoulement (35), qui présente une section transversale d'écoulement pouvant être traversée par un fluide, dans laquelle il est prévu un dispositif de réglage (36), au moyen duquel la section transversale d'écoulement du canal d'écoulement (35) pouvant être traversée est variable, **caractérisée en ce que** le dispositif de réglage (36) peut être déplacé au moyen d'un dispositif selon l'une quelconque des revendications 1 à 13.
